# EUROPEAN PATENT APPLICATION

(11) **EP 1 150 262 A2**
(43) Date of publication of application: **31.10.2001**
(21) Application number: 01106296.5
(22) Date of filing: 15.03.2001
(51) Int. Cl.: G07F 19/00

(54) **Payment for network-based commercial transactions using a mobile phone**

(30) Priority: 26.04.2000 EP 00108820
(71) Applicant: International Business Machines Corporation, Armonk, NY 10504 (US)
(72) Inventor: Husemann, Dirk, 8134 Adliswil (CH); Hermann, Reto, 8863 Buttikon (CH); Moser, Michael, 8006 Zürich (CH); Schade, Andreas, 8134 Adliswil (CH)
(74) Representative: Williams, Julian David

(57) **Abstract**

Method for enabling a customer, who has access to a customer system (40) and a mobile phone (43) with associated phone number, to order a deliverable (41) offered by a merchant system (45) at a certain price. The merchant system (45) is accessed through the customer system (40) and a network (44). The deliverable (41) can be ordered using the customer system (40). An order confirmation for the deliverable (41) is sent to the mobile phone (43) using the phone number of this phone and the ordering of the deliverable (41) is confirmed by using the mobile phone (43) to transmit a response to the merchant system (45) or to a carrier system (48). The phone bill (51) issued by the carrier system (48) for the mobile phone (43) is charged with the deliverable's price and the deliverable (41) is made available to the customer.

## Description

### TECHNICAL FIELD

The invention concerns a commercial transaction scheme, and in particular the payment process of such a transaction scheme. Also concerned are systems, computer program products, and computer program elements implementing aspects of such a commercial transaction scheme.

### BACKGROUND OF THE INVENTION

The advent of the Internet and other communications networks led to a whole new set of network-based commercial transaction schemes which are quite commonly referred to as electronic commerce (herein referred to as e-commerce) schemes. A commercial transaction in its broadest sense comprises three basic activities. A customer selects and orders goods or services. This step or sequence of steps is referred to as ordering process. After the completion of the ordering process, there is usually a service rendered or some goods delivered by a 'merchant' (herein referred to as delivery process) and there is some money or other consideration to be paid by the 'customer' for these services or goods, referred to as payment process.

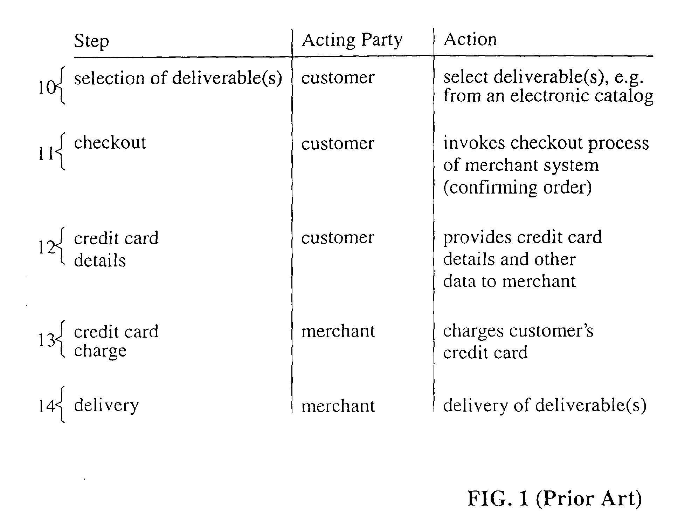

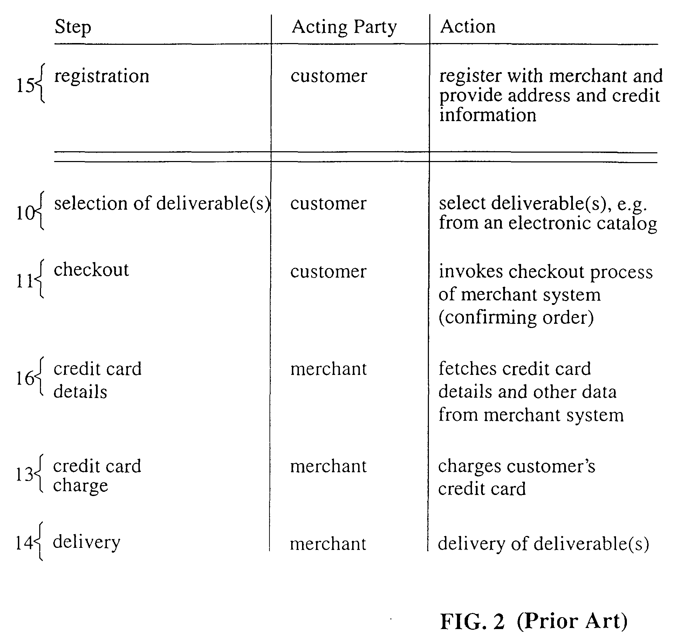

Typically, a network-based commercial transaction follows the patterns shown in Figure 1 or Figure 2. Either the customer has to register once (which includes the one-time disclosure of credit-card details) and then whenever the customer returns to a merchant's system identify itself to the system (e.g., by logging in or sending a cookie), or the customer has to provide credit card details every time he enters into a transaction with the merchant.

As shown in Figure 1, in a first step 10, the customer selects one or more deliverables. This can be done by browsing an online catalog, for example. Then, the customer invokes a checkout process - step 11 in Figure 1 - of the merchant's system. In step 12, the customer now needs to disclose credit card details and other data, such as the delivery address, to the merchant. In subsequent step 13, the merchant charges the customer's credit card account. Finally, the deliverable(s) are dispatched by the merchant to the customer (step 14 in Figure 1). The network-based commercial transaction scheme illustrated in Figure 1 is a transaction scheme without pre-registration.

Usually, all the steps 10 - 13 take place over the internet. With some systems the customer can either phone in the credit card number to an operator (or an automated phone menu system) or fax it in. Such a system is described in US patent 5,727,163, assigned to Amazon.Com, Inc.

Instead of providing the merchant with the credit card details, sometimes the customer can provide checking account details and thus authorize the merchant to do a direct debit to the respective account. The company Amazon.de offers this scheme, for example.

A very similar scheme is illustrated in Figure 2. This scheme is different from the one described in connection with Figure 1 in that it comprises a separate one-time registration step 15. This registration step 15 is usually carried out just once, preferably when ordering a deliverable for the first time. During this registration step, the customer registers with the merchant and provides address information and credit-card details to the merchant. Steps 10, 11, 13, and 14 are the same as in Figure 1. Since the customer has already registered all the necessary information with the merchant in step 15, the merchant simply needs to fetch this information from the merchant system, as depicted by step 16. This is a typical example of a network-based commercial transaction scheme with pre-registration.

An inherent problem of e-commerce over the internet is the payment process. In most cases the customer is required to enter credit-card details (e.g., the card number, the name of the card holder, and the card's expiry date) into an electronic form and transmit the data - in the best case encrypted - over the internet to the merchant who is supposed to deliver. The problem with this solution is manifold:
- The customer has to entrust the credit card details to the merchant; not only can the merchant then potentially use the credit card details for other purposes, the customer also has to trust the merchant to protect the credit card data adequately. Recent events have shown that assumption to be a risky one. Even though the customer at least has the remedy of disputing the purchase and have the credit card company cancel the transaction, the customer nevertheless carries the burden and risk.
- The merchant incurs the risk of accepting forged credit card details and delivers without getting reimbursed by the credit card company. The remedy of obtaining clearance from the credit card company is not always economical and typically time-consuming.
- Payment by credit card is too expensive for small amounts of money.

Mobile telephone systems are very widely used communication systems that are to a large extent independent from the internet and other networks. There is a secure payment process in place that allows the carriers to bill their customers for the usage of the mobile phone.

The global system for mobile (GSM) communications, an international fast growing digital cellular standard, is one particular example of a very popular mobile telephone system. The GSM system is a digital-based system created to provide a network which allows customers to use their GSM phones in many countries. The GSM network is implemented by a number of different carriers in different countries. Each carrier has it's own customers, in respect of whom the carrier holds private information relating to names, addresses, billing information, call destinations, and methods of paying bills. The carriers are independently administrated and are responsible for their customers for billing purposes. In other words, there exists a well established and secure payment process between the carriers and their customers.

It is an object of the present invention to provide an improved transaction scheme. It is another object of the present invention to provide an implementation for such an improved transaction scheme.

### SUMMARY OF THE INVENTION

According to the present invention, a transaction scheme is proposed that ties together the existing mobile telephone infrastructure and the fixed network (e.g., the internet) to solve the problems identified in the introductory portion of this specification.

There is therefore provided, in accordance with a preferred embodiment of the present invention, a method for enabling a customer having access to a customer system and a mobile phone with associated phone number, to order a deliverable that is offered by a merchant system at a certain price. The merchant system is accessed through the customer system and a network and an action is performed on the customer system to order the deliverable. The phone number of the mobile phone is used to send an order confirmation for the deliverable to the mobile phone. Then, the ordering of the deliverable is confirmed using the mobile phone to transmit a response to the merchant system or to a carrier system. According to the present invention, a phone bill issued by the carrier system for the mobile phone is charged with the certain price and the deliverable are made available to the customer.

There is moreover provided, in accordance with a preferred embodiment of the present invention, a method for ordering a deliverable that is offered by a merchant system at a certain price. In accordance with the invention, the merchant system is accessed through a customer system and network. The deliverable is displayed to a customer on the customer system and an action is performed on the customer system to order the deliverable. The phone number of a mobile phone (43; 73) of the customer is sent to the merchant system and an order confirmation for the deliverable is received on the mobile phone. The ordering of the deliverable is confirmed using the mobile phone by transmitting a response to the merchant system or to a carrier system. Finally, the deliverable is obtained by the customer.

Furthermore, there is provided, in accordance with a preferred embodiment of the present invention, a method for processing by a merchant system the order of a customer for a deliverable that is offered by this merchant system at a certain price. Whereby the customer has access to a customer system and a mobile phone with an associated phone number. According to the invention, the customer system is enabled to display the deliverable and to allow the customer to order the deliverable at the merchant system via the customer system and a network. An order confirmation for the deliverable is sent to the mobile phone using the phone number and an order confirmation or payment confirmation is received from a carrier system. Then, the deliverable is made available to the customer.

There is moreover provided, in accordance with a preferred embodiment of the present invention, a method for handling by a carrier system the payment process for a customer who ordered a deliverable through a merchant system at a certain price, whereby the customer has access to a customer system and a mobile phone with and associated phone number. According to this method, transaction information and the phone number of the mobile phone are obtained for the ordering of the deliverable from the merchant system. An order confirmation for the deliverable is sent to the mobile phone using the phone number and an order confirmation for the deliverable is received through the mobile phone. A phone bill maintained by the carrier system for the mobile phone is charged with the certain price and an order confirmation or payment confirmation is sent to the merchant system.

There is moreover provided, in accordance with a preferred embodiment of the present invention, a merchant system for offering a deliverable via a network to a potential customer. Also provided is, in accordance with a preferred embodiment of the present invention, a carrier system for handling the payment process part of a commercial transaction between a customer, using a customer system and a mobile phone, and a merchant system.

In addition, a computer program product and a computer program element are provided that implement the methods according to the present invention.

The drawbacks of known systems and schemes are avoided by the schemes and systems as claimed in the attached claims. The present invention allows to implement a more secure marketplace for commercial transactions.

### DESCRIPTION OF THE DRAWINGS

The invention is described in detail below with reference to the following schematic drawings.

It is to be noted that the Figures are not drawn to scale.
- **FIG. 1**: is a schematic representation of a known electronic transaction scheme.
- **FIG. 2**: is a schematic representation of a known electronic transaction scheme with pre-registration step.
- **FIG. 3**: is a schematic representation of an electronic transaction scheme with pre-registration step, according to one embodiment of the present invention.
- **FIG. 4**: is a schematic representation of another electronic transaction scheme, according to another embodiment of the present invention.
- **FIG. 5**: is a schematic block diagram of an embodiment in accordance with the present invention.
- **FIG. 6**: is a schematic block diagram of another embodiment in accordance with the present invention.
- **FIG. 7**: is a schematic representation of the electronic transaction scheme underlying some of the embodiments of the present invention.

### DESCRIPTION OF PREFERRED EMBODIMENTS:

The basic concept of the present invention is described after the basic terminology is defined.

Customer system: A customer system is a network-attachable device that has some computing capabilities. Examples are: personal computers (PCs), workstations, servers, laptops, personal digital assistants (PDAs), network computers, and so forth. Other examples are WAP phones, palm pilots, belt computers, pocket computers, wrist watches with integrated computer, electronic wallets, car computers, etc. The network connection is either established via some cable or fiber, or by means of an infrared or RF link. A customer system can also be an aggregation of several devices. This customer system is suited for operation by a customer desiring to obtain some service or to buy some goods via a network. The customer system may be a general purpose device especially programmed to perform the steps of the present invention, or a device equipped with appropriate software that controls the device to perform these steps. In addition, a customer system may comprise a database entertaining a list of transactions, a call-in unit that connects to a telephone network, and other devices or units.

Merchant system: A merchant system is a network-attachable system or aggregation of systems, which are employed by the merchant, or by somebody on behalf of the merchant, in order to offer services and/or goods via a network. Such a merchant system has computing capabilities. A merchant system may comprise, for example: personal computers (PCs), workstations, laptops, network computers, servers, and so forth. In addition, a merchant system may comprise a database entertaining an electronic (online) catalog, acall-in unit that connects to a telephone network, and other devices or units. The merchant system is programmed to perform the steps of the present invention. For this purpose, the merchant system may be equipped with appropriate software that controls the system to perform these steps.

The word 'deliverable' is herein used as a synonym for goods, products, articles, items, subscriptions, services, etc. It subsumes everything - tangible as well as intangible - that either can be delivered (e.g., via a network or through conventional distribution channels, such as regular mail or courier), or that can be made accessible, such as a database, or some collection of digitized art. Examples are: effects, furnishings, furniture, gear, movables, possessions, property, commodities, merchandise, stock, stuff, wares, articles, subscriptions, newspapers, journals, printed media, equipment, softcopies, digitized images, videos, audio streams, software, currency, and so forth.

The word 'network' is herein used as a synonym for computer networks and communication networks of any kind. When referring to networks, wireless, fiber-based, or cable-based networks are meant.

A 'merchant' is a legal entity or person that directly or indirectly offers, sells, or lends one or more deliverables. Typical examples of merchants are: agents, dealers, suppliers, distributors, representatives, retailers, salespersons, shopkeepers, tradespersons, vendors, warehouses, licensors, manufacturers, broker, bank, financial institutions, agency, and so forth.

A 'customer' is a legal entity or person that directly or indirectly wishes to accept, buy, lease, or borrow one or more deliverables. Typical examples are: buyers, clients, consumers, prospects, purchasers, shoppers, readers, subscribers, licensees.

The term "mobile phone" is used to subsume analog and digital phones that connect to a wireless channel. Examples are: handportables, GSM phones, cellular phones, Smartphones, Featurephones, transportables, satellite phones, and so forth.

The present invention changes the current network-based commercial schemes. Instead of using a credit card, it is proposed to utilize the existing mobile phone network infrastructure to do order confirmation and billing.

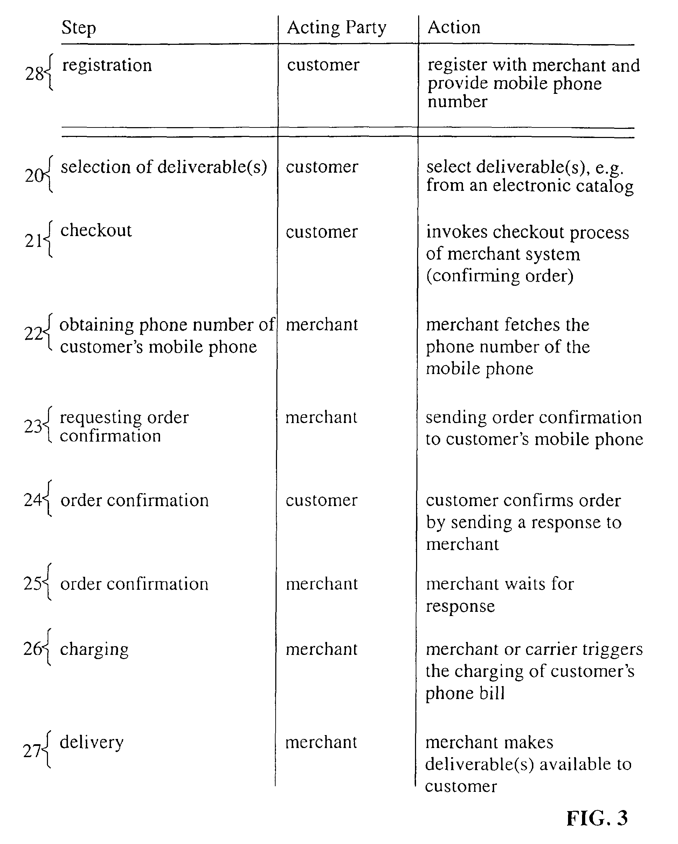

Assuming an inventive scheme with pre-registration step (similar to the one of Figure 2), the customer provides the mobile phone number to the merchant in a registration step 28, as illustrated in Figure 3. The selection of deliverable(s) and the checkout steps remain more or less as they are. The result of the checkout process, however, changes, as illustrated in Figure 3 and as outlined below:
- the customer accesses the merchant system through the customer system. The customer system is connected through a network (e.g., the internet or world wide web) to the merchant system. A browser may be used on the customer system in order to be able to access the merchant system.
- the customer performs an action on the customer system in order to select the deliverable(s) (step 20 in Figure 3). There are different schemes known in the art that allow a customer to select a deliverable(s) online. The customer can, for example, select a deliverable from an electronic catalog by a mouse click, or by putting a deliverable into a shopping cart;
- in an optional step, the customer invokes a checkout process (step 21 in Figure 3). This is usually done by clicking on a button to submit the order, or by having the customer confirm that the selection of deliverables was completed. No conventional checkout process is required if a single-action ordering scheme is implemented, as for example described and claimed in US patent 5,960,411. This US patent is incorporated by reference.
- the merchant needs to obtain the phone number of the customer's mobile phone (step 22 in Figure 3). Since the mobile phone number has been registered with the merchant in a pre-registration step 28, the merchant system may fetch this phone number from a memory;
- the merchant provides the customer with a confirmation address (e.g., a special confirmation phone number or a special confirmation e-mail address) by sending this confirmation address to the customer's mobile phone (step 23 in Figure 3).
- the customer confirms the order by using the mobile phone and the confirmation address (step 24 in Figure 3). If the confirmation address is a special confirmation phone number, then the customer dials this confirmation phone number with the mobile phone. Otherwise, the customer sends an e-mail from the mobile phone to the confirmation e-mail address.
- the merchant monitors the incoming call indications ("caller ID") on the phone connection associated with the confirmation phone number or the incoming e-mails (step 25 in Figure 3). The caller ID usually is the caller's mobile phone number and/or name. The merchant may keep a list of open transactions and the respective mobile phone numbers or e-mail addresses of the associated customers in a database. Once the customer's response (e.g., the customer's mobile phone number or name) is detected, the merchant considers the open transaction associated with the mobile phone to be successfully closed (confirmed);
- the merchant and/or mobile phone carrier triggers the charging of the amount due to the customer via the mobile phone carrier's billing system where the customer is uniquely identified through the mobile phone number (step 26 in Figure 3);
- the merchant makes the deliverable available to the customer (step 27 in Figure 3).

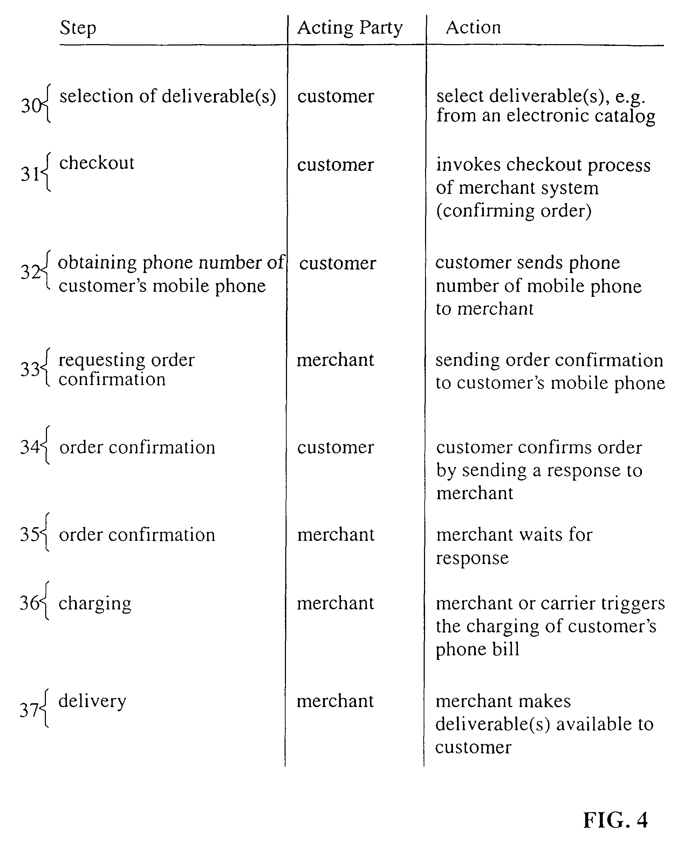

A scheme, according to the present invention, without pre-registration is illustrated in Figure 4. This scheme comprises the following steps:
- the customer accesses the merchant system through the customer system and a network;
- the customer performs an action on the customer system in order to select the deliverable(s) (step 30 in Figure 4);
- in an optional step, the customer invokes a checkout process (step 31 in Figure 4). This is usually done by clicking on a button to submit the order, or by having the customer confirm that the selection of goods was completed;
- the merchant needs to obtain the phone number of the customer's mobile phone (step 32 in Figure 4). Since in the present example the mobile phone number has not been registered with the merchant in a pre-registration step, the customer has to provide the merchant system with the phone number;
- the merchant provides the customer with a confirmation address (e.g., a special confirmation phone number or a special confirmation e-mail address) by sending this confirmation address to the customer's mobile phone (step 33 in Figure 4).
- the customer confirms the order by using the mobile phone and the confirmation address (step 34 in Figure 4). If the confirmation address is a special confirmation phone number, then the customer dials this confirmation phone number with the mobile phone. Otherwise, the customer sends an e-mail from the mobile phone to the confirmation e-mail address.
- the merchant monitors the incoming call indications ("caller ID") on the phone connection associated with the confirmation phone number or the incoming e-mails (step 35 in Figure 4). The merchant may keep a list of open transactions and the respective mobile phone numbers or e-mail addresses of the associated customers in a database. Once the customer's response (e.g., the customer's mobile phone number) is detected, the merchant considers the open transaction associated with the mobile phone to be successfully closed (confirmed);
- the merchant and/or mobile phone carrier triggers the charging of the amount due to the customer via the mobile phone carrier's billing system where the customer is uniquely identified through the mobile phone number (step 36 in Figure 4);
- the merchant makes the deliverable available to the customer (step 37 in Figure 4).

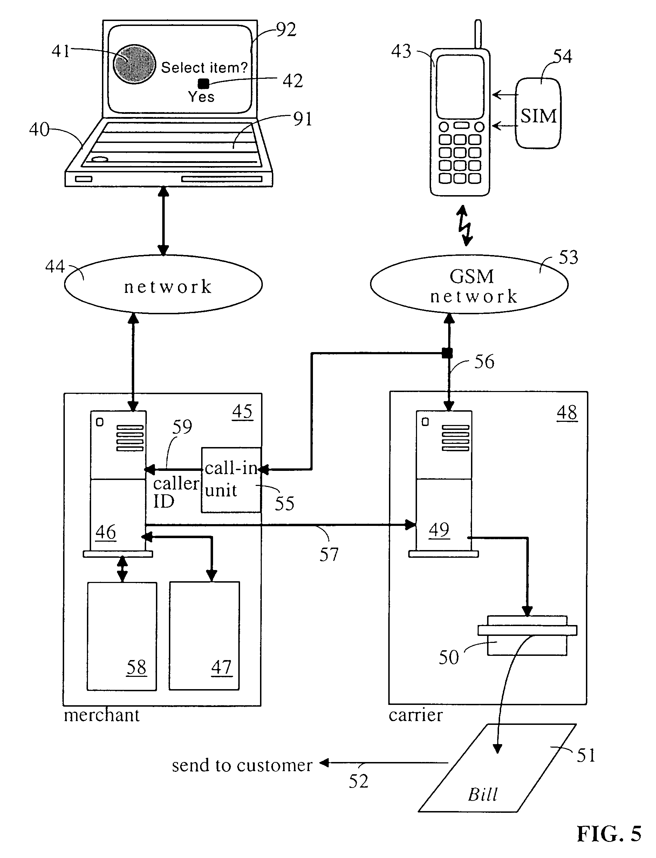

Another embodiment of the present invention is schematically depicted in Figure 5. This Figure gives an overview of the different parties and systems involved. The customer uses a customer system 40, such as a portable computer, that is connected to a network 44 (e.g., the internet). The customer system 40 comprises a keyboard 91 and a display 92. In addition, the customer has a mobile phone 43 with a subscriber identity module (SIM) 54 card. A SIM card is a credit-card or mini sized card which holds a microprocessor chip which stores information such as the mobile phone number. The SIM card 54 can be inserted into the mobile phone 54 to make it live, as indicated by arrows in Figure 5.

The mobile phone 43, after being activated, connects via a mobile telephone network 53 (e.g., a GSM network) and to a fixed telephone network 56 (e.g., a public switched telephone network; PSTN) and a carrier system 48. The mobile telephone network 53 and the fixed telephone network 56 are arranged such that the fixed telephone network 56 can be reached from the mobile phone 43. In other words, the mobile phone 43 has access to the services offered by the fixed telephone network 56. For sake of simplicity, the carrier system 48 just comprises a server 49 and a printer 50.

In the present example, the merchant system 45 comprises a server 46, a database 47 with an online catalog, and a database 58 with a list of open transactions. The merchant system 45 is linked to the network 44. Furthermore, the merchant system 45 in the present embodiment has a call-in unit 55 that is connected to the fixed telephone network 56. Note that the call-in unit 55 might also be connected to the mobile network directly.

The customer accesses the merchant system 45 through the customer system 40 and the network 44. The merchant system 45 offers an online catalog with various items together with a price for each item. In the present example, the deliverable 41 is displayed on the display of the customer system 40. The customer now performs an action on the customer system 40 in order to select the deliverable 41. This can be done by a left-mouse-click on the radio button 42 that is also displayed. If this is the only deliverable the customer wants to obtain, or if there are no other deliverables available, the selection process may be finished. The merchant system 45 may thus proceed to an order confirmation process. In an optional step, the customer may invoke a checkout process prior to the confirmation process. This is usually done by clicking on a button to submit the order, or by having the customer confirm that the selection of deliverables was completed.

According to the present invention, the merchant system 45 needs to obtain the phone number of the customer's mobile phone 43. If the mobile phone number has been registered with the merchant system 45 in a pre-registration step, the merchant system 45 can fetch this phone number from a memory inside the server 46, for example. If no mobile phone number has been pre-registered, the customer needs to provide this number to the merchant system 45. This can be done via the customer system 44 or via the mobile phone 43.

The merchant system 45 provides the customer with a confirmation address. In the present example, this confirmation address is a special call-in phone number provided by the merchant system 45. For this purpose, the merchant system 45 has acall-in unit 55 that is connected to the fixed telephone network 56. The customer confirms the order by dialing this special call-in number with the mobile phone 43. A connection is established from the mobile phone 43 via a wireless channel to a base station. The base station feeds the call into the fixed telephone network 56. The server 46 monitors the incoming call indications ("caller ID"). The merchant system 45 keeps a list of open transactions and the respective mobile phone numbers of the associated customers in database 58. The server 46 compares the customer's response (received from the call-in unit 55 via link 59) with the entries in the database 58. Once the customer's response (e.g., the customer's caller ID) is matched with an entry in the database 58, the merchant system 45 considers the open transaction associated with the mobile phone 43 to be successfully closed (confirmed). The merchant system 45 triggers the charging of the amount due to the customer via the mobile phone carrier's billing system where the customer is uniquely identified through the mobile phone number. For this purpose, the server 46 may connect to the server 49, e.g., via a leased line 57. The carrier system 48 comprises a printer 50 that is controlled by a billing software residing on the server 49. The billing software sends a print job to the printer 50 to generate a bill 51. This bill 51 is sent to the customer by regular mail, as schematically depicted by the arrow 52. One has many different options as the when and how to create the bill. The billing software may comprise an accrual module which collects all items that need to be bill on a per-customer basis. At the end of an accounting period, e.g. at the end of each month, the bill may be created, printed, and send to the customer. This approach is acceptable if the deliverables are not too expensive. For more expensive deliverables, it is appropriate to issue a bill right away. Delivery of the deliverable may even be conditioned on the payment of the bill. The carrier may also subcontract/outsource the bill handling procedures to a trusted party. The present scheme remains more or less the same, except for the fact that the necessary information needs to be forwarded to the respective trusted party.

Payment of open bills can be accepted via bank account, credit card, cash, check, and wire transfer. The carrier and/or merchant can specify a credit limit for some or all of their customers.

After the bill 51 was issued, or after the bill 51 was issued and the amount paid by the customer, the merchant system 45 makes the deliverable 41 available to the customer. Depending on the kind of deliverable, there are many different ways to actually do this. If the deliverable is a tangible item, then it is prepared for shipment and delivered to the customer by mail of courier. Likewise, the customer may pick it up. When the deliverable is an intangible item, the server 46 may simply make it available for download by the customer system 40 (pull approach), or the server 46 may send it to the customer system 40 (push approach).

The merchant system 45 and/or the carrier system 48 may comprise hardware modules, software modules or hardware and software modules that perform the various steps of the present scheme.

According to the above described embodiments, the carrier system handled the payment process mainly. In another embodiment of the present invention, the carrier system can also carry out certain of the transaction closure steps. For this purpose, the merchant system may forward the details of an open transaction to the carrier system. The carrier closes the transaction with the customer as described above. In this case, the carrier system needs a special call-in number and a call-in unit that is able to monitor incoming calls. When the customer calls this call-in number, the call-in unit recognizes the caller ID and notifies the carrier system's server. The open transactions are stored in a database in the carrier system. The server compares the caller ID with the entries in this database to complete a transaction. If the server is able to match the caller ID with an entry in the database, the customer's order is deemed to be completed and the payment process is initiated. As part of this payment process, the carrier directly charges the amount due to the customer's phone bill. The carrier system also notifies the merchant system of the successful completion of the transaction and credits the merchant's account with the amount due. The merchant makes the deliverable(s) available to the customer.

Several extensions to these embodiments are possible.

Instead of providing the confirmation call-in number to the customer, the merchant (or carrier) can send a GSM short message service (SMS) message to the customer system containing an order ID (which is displayed to the customer on the customer system's screen or on the mobile phone display) and the confirmation phone number to dial. The SMS is the ability to send and receive text messages to and from mobile phones. The text can comprise of words or numbers or an alphanumeric combination.

The customer can then match the order ID contained in the GSM SMS received to the order ID displayed. Using the GSM phone's SMS number extraction feature, for example, the customer can confirm the order by calling the merchant or carrier from the GSM phone.

Another alternative is that the merchant system transmits (as part of the checkout process) a Web page containing a checkout applet that can communicate locally with the customer's mobile phone (for example, using the Bluetooth protocol). The customer would confirm the order through the applet and the applet causes the mobile phone to prepare the confirmation call. The customer would then just have to initiate the call.

Instead of doing a confirmation call, the customer could send a GSM SMS or an e-mail to the merchant system.

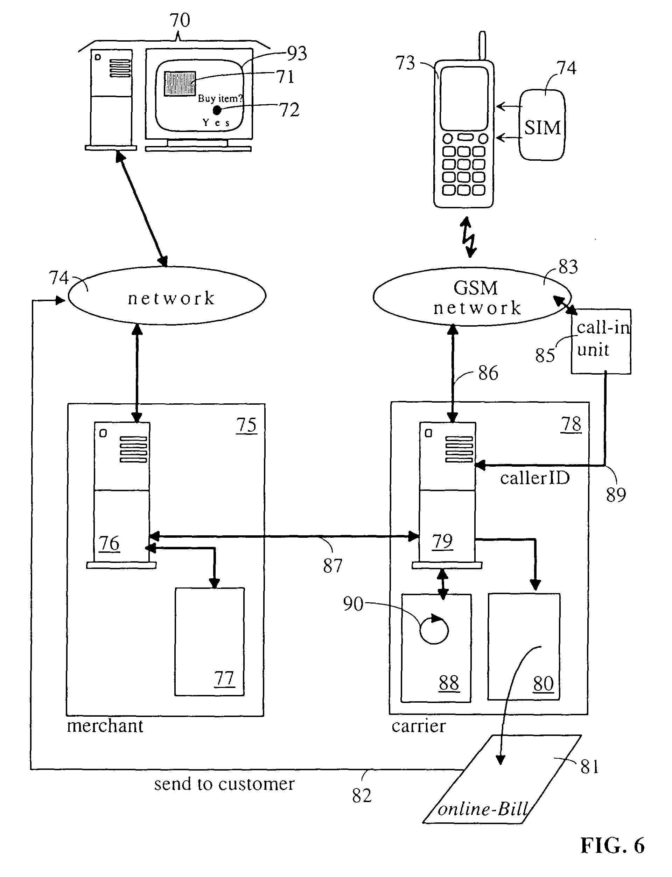

Yet another embodiment is illustrated in Figure 6. The customer uses a customer system 70, such as a personal computer with a touch screen 93, that is connected to a network 74 (e.g., the world wide web). In addition, the customer has a mobile phone 73 with a SIM card 74.

The mobile phone 73 connects via a mobile telephone network 73 (e.g., a GSM network) and to a fixed telephone network 86 (e.g., a PSTN) and a carrier system 78. The mobile telephone network 83 and the fixed telephone network 86 are arranged such that the fixed telephone network 86 can be reached from the mobile phone 73. For sake of simplicity, the carrier system 78 just comprises a server 79, a database 88, and a billing module 80. Furthermore, the carrier system 78 in the present embodiment is connected via a link 89 to a call-in unit 85 that is connected to the mobile telephone network 83.

In the present example, the merchant system 75 comprises a server 76, a database 77 with an online catalog. The merchant system 75 is linked to the network 74 (e.g., via a modem). The customer accesses the merchant system 75 through the customer system 70 and the network 74. The merchant system 75 offers an online catalog with various items together with a price for each item. In the present example, the deliverable 71 is displayed on the display 93 of the customer system 70. The customer now performs an action on the customer system 70 in order to select the deliverable 71. This can be done by touching the radio button 72 that is also displayed on the touch screen 93. If this is the only deliverable the customer wants to obtain, or if there are no other deliverables available, the selection process may be finished. An order confirmation process may thus follow. In an optional step, the customer may invoke a checkout process prior to the confirmation process. This is usually done by clicking on a button to submit the order, or by having the customer confirm that the selection of deliverables was completed.

According to the present invention, the carrier system 78 needs to obtain the phone number of the customer's mobile phone 73. If the mobile phone number has been registered with the merchant system 75 and/or the carrier system 78 in a pre-registration step, the carrier system 78 can fetch this phone number from a memory inside the server 76 or 79, for example. If no mobile phone number has been pre-registered, the customer needs to provide this number to the merchant system 75 or carrier system 78. This can be done via the customer system 70 or via the mobile phone 73.

The merchant system 75 forwards the details of an open transaction, e.g., the order identifier (order ID) and a unique transaction number, to the carrier system 78. For this purpose, the merchant system 75 assigns an order ID for each deliverable 71 or set of deliverables ordered a particular customer. This information can be exchanged via a dedicated line 87, for example. Likewise, the carrier system 78 can be linked via the network 74 to the merchant system 75. The carrier system 78 keeps a list of open transactions and the respective mobile phone numbers of the associated customers in database 88. The server 79 compares the customer's response (received from the call-in unit 85 via link 89) with the entries in the database 88. Once the customer's response (e.g., the customer's caller ID and/or the order ID) is matched with an entry in the database 88, the carrier system 78 considers the open transaction associated with the mobile phone 73 to be successfully closed (confirmed). The carrier system 78 needs to provide the customer with a confirmation address. In the present example, this confirmation address is a special call-in phone number (e.g., a special GSM service number). The carrier system 78 generates a GSM SMS message with the order ID and a unique transaction number. This SMS is send to the customer's mobile phone 73. The customer receives this SMS on the mobile phone 73. The customer then returns the received SMS message to the special call-in phone number provided that he wants to complete the ordering process he initiated for the deliverable 71. Once the SMS message is received by the carrier system 78 via call-in unit 85 and the link 89, the closeout of the transaction is deemed to be completed and the payment process is initiated using a billing module 80. In the present example, the billing module 80 generates a so-called online-bill 81. This bill is not printed and delivered through a conventional mail system. It is delivered to the customer as an electronic document, preferably in an encrypted fashion. In the present embodiment, the online-bill 81 is delivered via a link 82 and the network 74 to the customer's system 70. The customer can pay the bill using an online-banking software, for example. All this can be done within minutes or even seconds. The remainder is the same as above.

The above embodiments can be modified by implementing a housekeeping process that checks the database for transactions that are older than a pre-defined expiry age. In Figure 6 this is schematically illustrated by the symbol 90. In this example, the housekeeping process goes through the database 88 to find entries that have expired. These entries are then flushed/removed. This allows to remove open transactions that have not been confirmed by the customer within a predefined period of time. The expiry time can be anything between seconds, hours and even days. The housekeeping process avoids the database to be filled up and it provides for additional security because any open transaction might be misused if somebody manages to break into the carrier's system.

The merchant system 75 and/or the carrier system 78 may comprise hardware modules, software modules or hardware and software modules that perform the various steps of the present scheme.

Extending the previous embodiment, the customer can send the GSM SMS message received from the carrier to another special service number to abort the transaction. For this purpose, the carrier may entertain two special service numbers: one for transaction confirmation, the other for transaction abort.

According to another embodiment, the carrier or merchant system may send aGSM SMS message with a "receipt" to the customer's mobile phone once the transaction has been successfully concluded. The customer can store this "receipt" away.

Another improvement would be to send a GSM SMS to the customer's mobile phone with details about the bill. This gives the customer to review what he just has order, together with the price and probably the mode and terms of payment.

It is also possible to send a GSM SMS to the customer once the delivery process has been initiated or completed. If the deliverable is some online content, e.g., an online document, then the customer could receive a user ID and password via a GSM SMS.

Another embodiment is conceivable where the customer's GSM SIM card is employed to provide for a transaction scheme that is very convenient. In this embodiment, a SIM card is employed that contains a specific SIM application. The merchant system or the carrier system (depending on which embodiment of the invention is implemented) sends a special GSM SMS message containing order details (e.g., a special call-in number and/or an order ID) to the customer's mobile phone. The customer's SIM card sits in the phone and intercepts this SMS message, extracts the order details from the SMS message, and interactively obtains the customer's consent to the order process. This can be done using the keypad and screen of the GSM phone, for example. In case the customer confirms the order, the SIM card automatically sends off a GSM SMS message to either the merchant system or the carrier (or it initiates the confirmation call).

Another variation on the previously described embodiments is possible if one uses the wireless application protocol (WAP). Instead of using a SIM application, as described in the last paragraph, the merchant system may use the push feature of WAP to push a wireless markup language (WML) deck (script applet) to the customer's WAP-enabled GSM phone. This WML applet contains the order ID and asks the customer to confirm the order.

In yet another embodiment, the merchant system forwards the details of an open transaction to a third-party company that specializes in transaction capturing. The customer is registered with that company and provided it with the credit card details (or account details for direct debit or something similar).

The preferred implementation of the present invention is the case where the merchant system transfers an open transaction to a GSM carrier. The GSM carrier then sends a GSM SMS message, containing the merchant's order ID and a unique transaction ID, to the customer's GSM phone. The customer confirms the order by sending the SMS message on to a special service number entertained by the GSM carrier. The GSM carrier charges the amount due to the customer's phone bill, notifies the merchant of the customer's confirmation, and credits the merchant's account with the amount due.

The authentication of customers is an interesting issue that needs to be considered in light of the present invention. The present schemes are based on the assumption that there is one customer per mobile phone, namely the owner. In other words, it is not envisaged to "share" a mobile phone with another person since this would give the other person the opportunity to order deliverables on behalf of the owner.

A logical improvement which rectifies this weakness is described below in form of another embodiment.

According to another embodiment, protection against misuse is obtained by requiring the user of a mobile phone to type in a short PIN before the phone be used. This PIN may be combined with the key stored in the mobile phone to form a composite key, which could be used for authentication. Such an embodiment can be designed around a SIM card which offers a mechanism for authentication via a PIN. This PIN is required as authorization before or while using a mobile phone in connection with the present transaction schemes. This inhibits unauthorized usage of the mobile phone.

Those skilled in the art will understand that the systems illustrated in Figures 5 and 6 are examples of systems implementing the present invention and that the configuration and construction of the various elements of the systems may use well-known hardware and/or software. Those skilled in the art will recognize that many modifications and changes can be made to the particular embodiments described herein above without departing from the spirit and scope of the invention.

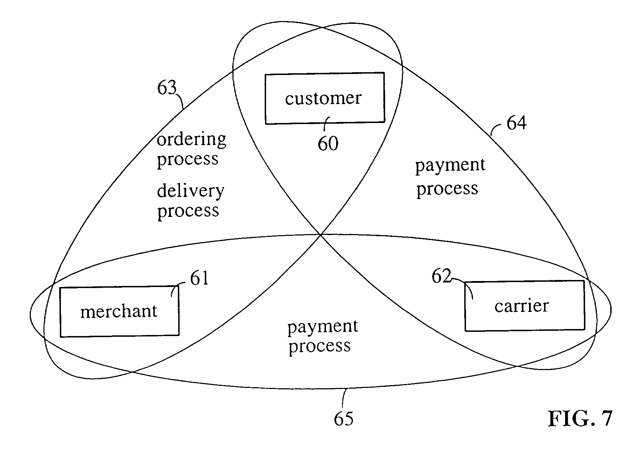

In Figure 7 a simplified representation of the scheme, according to the present invention, is given. In this graphical representation the order confirmation process is assumed to be part of the payment process. Figure 7 is a generalized representation of a transaction scheme, according to the present invention, where the customer 60, merchant 61, and carrier 62 interact with each other. The ellipse 63 indicates that the customer 60 and merchant 61 interaction concentrates on the ordering process and the delivery process. The payment process is between the customer 60 and carrier 62 (ellipse 64) on one hand, and between the carrier 62 and merchant 61 on the other hand (ellipse 65).

In the present example, the ordering process (ellipse 63), comprises the following activities/actions: **(1)** the customer 60 contacts the merchant 61 through the customer system and a network; **(2)** the customer 60 performs an action on the customer system in order to select the deliverable(s); **(3)** in an optional step, the customer 60 invokes a checkout process. **(4)** the merchant 61 obtains the phone number of the customer's mobile phone; and **(5)** the merchant 61 or carrier 62 provides the customer 60 with a confirmation address (e.g., a special phone call-in number).

The payment process (ellipse 64), comprises the following activities/actions: **(1)** the customer 60 confirms the order by using the mobile phone and the confirmation address; **(2)** the carrier 62 monitors the incoming call indications ("caller ID") on a phone line associated with the confirmation phone number or the incoming e-mails (note that this is a variation of the scheme presented in Figures 4 and 5 where the merchant system monitors incoming calls).

The carrier 62 may receive a list of open transactions and the respective mobile phone numbers or e-mail addresses of the associated customers from the merchant 61. This information is kept by the carrier 62 in a database; **(3)** the carrier 62 triggers the charging of the amount due to the customer 60 via the carrier's billing system.

The payment process (ellipse 65), comprises the following activities/actions: **(1)** the carrier 62 notifies the merchant 61 of the successful transaction and credits the merchant's account with the amount due.

The delivery process (ellipse 63), comprises the following activities/actions: **(1)** the merchant 61 makes the deliverable available to the customer 60.

With the mobile phone a security token is introduced. A mobile phone (such as a GSM phone) can be PIN-protected (personal identification number) by its owner. Each mobile phone is thus uniquely identified and its owner is known (the exception being customers using prepaid SIM cards for their GSM phones). The customer already has a contractual relationship with a carrier for billing purposes. There are billing standards (e.g., the TAP3 standard introduced by the GSM Association) that are continually extended and enhanced. In contrast to the current model of payment over the internet - transmitting ones credit card details to the merchant, who then can in the worst case misuse the credit card data - with the present invention in its various implementations the customer is in control of the payment process again as he has to give consent for each and every payment. Furthermore, the customer is dealing with an organization he is already familiar with (the carrier) and which serves as a neutral third party (in most cases). The merchant on the other hand deals with a known organization as well (again, the carrier) and can rely on the customer being verified and probably even having a certain credit limit granted by the carrier.

Since the payment process is done via a secure and well established channel between the customer and the carrier, there is no need for encryption of the transactions and exchange of information between the customer system and the merchant system. This allows to simplify many of today's transaction schemes.

A GSM-based scheme has the advantage over other mobile telephone systems that the data transmission between the transmitters and the GSM units is encrypted. Without encryption, eavesdropping is very simple in a wireless network (e.g., previous analog mobile phone systems).

Mobile telephone networks are implemented by a number of different carriers Each carrier has it's own customers, in respect of whom the carrier holds private information relating to names, addresses, billing information, methods of paying bills, etc. Thus, a distinction should be made in connection with the herein described transaction schemes between the information which the carrier shares with the merchant system or other parties involved, and the information which is generally private as between the customer, and the carrier.

Carriers have two methods to differentiate themselves in the marketplace; selling basic telephone services at a lower price point, or by providing new (probably fee-based) services that are viewed as added value by their customers. The present invention is a good example for such a service that can be offered by a carrier. Consumers and businesses want 'easy to understand and use' products that satisfy their complex needs and are easily accessible. The growth of the internet and the new commercial transaction schemes presented herein are good examples of these market forces at work.

Note, that the invention is not restricted to internet payment schemes. It can essentially be used for every process where a confirmed and authenticated transaction is required.

The individual steps of the processes described herein and listed in the attached claims not necessarily have to be carried out in the given order.

The present invention can be realized in hardware, software, or a combination of hardware and software. Any kind of computer system or other apparatus adapted for carrying out the methods described herein is suited. A typical combination of hardware and software could be a general purpose computer system with a computer program that, when being loaded and executed, controls the computer system such that it carries out the methods described herein. The present invention can also be embedded in a computer program product, which comprises all the features enabling the implementation of the methods described herein, and which - when loaded in a computer system - is able to carry out these methods.

## Claims

1. Method for enabling a customer, who has access to a customer system (40; 70) and a mobile phone (43; 73) with associated phone number, to order a deliverable (41; 71) offered by a merchant system (45; 75) at a certain price, comprising
• accessing the merchant system (45; 75) through the customer system (40; 70) and a network (44; 74);
• performing an action on the customer system (40; 70) to order the deliverable (41; 71);
• obtaining the phone number of the mobile phone (43; 73);
• sending an order confirmation for the deliverable (41; 71) to the mobile phone (43; 73) using the phone number of the mobile phone (43; 73);
• confirming the ordering of the deliverable (41; 71) by using the mobile phone (43; 73) to transmit a response to the merchant system (45; 75) or to a carrier system (48; 78);
• charging a phone bill (51; 81) issued by the carrier system (48; 78) for the mobile phone (43; 73) with the certain price; and
• making the deliverable (41; 71) available to the customer.

2. Method for ordering a deliverable (41; 71) that is offered by a merchant system (45; 75) at a certain price, comprising
• accessing the merchant system (45; 75) through a customer system (40; 70) and a network (44; 74);
• displaying the deliverable (41; 71) to a customer on the customer system (40; 70);
• performing an action on the customer system (40; 70) to order the deliverable (41; 71) at the merchant system (45; 75);
• sending the phone number of a mobile phone (43; 73) of the customer to the merchant system (45; 75);
• receiving an order confirmation for the deliverable (41; 71) on the mobile phone (43; 73);
• confirming the ordering of the deliverable (41; 71) using the mobile phone (43; 73) to transmit a response to the merchant system (45; 75) or a carrier system (48; 78);
• obtaining the deliverable (41; 71).

3. Method for processing by a merchant system (45; 75) the order of a customer for a deliverable (41; 71) that is offered by the merchant system (45; 75) at a certain price, the customer having access to a customer system (40; 70) and a mobile phone (43; 73) with associated phone number, comprising
• enabling the customer system (40; 70) to display the deliverable (41; 71) to the customer;
• enabling the customer to order the deliverable (41; 71) at the merchant system (45; 75) via the customer system (40; 70) and a network (44; 74);
• enabling the sending of an order confirmation for the deliverable (41; 71) to the mobile phone (43; 73) using the phone number;
• receiving an order confirmation or payment confirmation from a carrier system (48; 78); and
• making the deliverable (41; 71) available to the customer.

4. Method for handling by a carrier system (48; 78) the payment process for a customer who ordered a deliverable (41; 71) through a merchant system (45; 75) at a certain price, the customer having access to a customer system (40; 70) and a mobile phone (43; 73) with associated phone number, comprising
• obtaining transaction information for the ordering of the deliverable from the merchant system (45; 75);
• obtaining the phone number of the mobile phone (43; 73);
• sending an order confirmation for the deliverable (41; 71) to the mobile phone (43; 73) using the phone number;
• receiving through the mobile phone (43; 73) an order confirmation for the deliverable (41; 71);
• charging a phone bill (51; 81) maintained by the carrier system (48; 78) for the mobile phone (43; 73) with the certain price; and
• sending an order confirmation or payment confirmation to the merchant system (45; 75).

5. The method of claim 1 or claim 3, wherein the merchant system (45; 75) offers an online catalog (47; 77) with a plurality of deliverables for selection by the customer.

6. The method of claim 1 or 2, comprising a checkout step (21) after the step of performing an action on the customer system (40; 70) in order to select the deliverable (41; 71).

7. The method of claim 1 or 2, comprising the steps:
• sending the phone number of the mobile phone (43; 73) from the customer system (40; 70) or the mobile phone (43; 73) to the merchant system (45; 75);
• storing the phone number so that it is obtainable if needed by the carrier system (48; 78) and/or merchant system (45; 75).

8. The method of claim 3 or 4, comprising the steps:
• receiving the phone number of the mobile phone (43; 73) from the customer system (40; 70) or the mobile phone (43; 73);
• storing the phone number so that it is obtainable if needed by the carrier system (48; 78) and/or merchant system (45; 75).

9. The method of claim 1, 3, or 4, wherein the step of sending an order confirmation for the deliverable (41; 71) to the mobile phone (43; 73) is done by means of a GSM SMS message.

10. The method of claim 2, wherein the step of receiving an order confirmation for the deliverable (41; 71) by the mobile phone (43; 73) is done through a GSM SMS message.

11. The method of claim 9 or claim 10, wherein the GSM SMS message comprises a special call-in phone number and/or an order identifier (order ID).

12. The method of claim 10, wherein the customer performs an action on the mobile phone (43; 73) in order to confirm the ordering of the deliverable (41; 71).

13. The method of claim 1, 2, 3, or 4, wherein the mobile phone (43; 73) prompts the customer for a personal identification number (PIN) for authentication purposes.

14. The method of claim 1 or claim 3, wherein a plurality of deliverables is offered for selection by the customer.

15. The method of claim 1, 3, or 4, wherein the step of sending an order confirmation for the deliverable (41; 71) to the mobile phone (43; 73) is done using the push feature of the wireless application protocol (WAP) in order to push a wireless markup language (WML) script applet to the mobile phone (43; 73).

16. The method of claim 1, 2, 3, or 4, wherein the merchant system (45; 75) assigns an order identifier (order ID) for each deliverable (41; 71) or set of deliverables ordered.

17. The method of claim 1, 2, 3, or 4, wherein the merchant system (45; 75) or carrier system (48; 78) maintains a list of open orders.

18. The method of claim 17, wherein a housekeeping process is carried out to remove open orders for which no confirmation is received within a pre-defined period of time.

19. The method of claim 1 or claim 4, wherein the phone bill (51; 81) is either delivered to the customer through a conventional distribution channel (52), preferably by mail, or to the customer system (70) through a communication link (82, 74).

20. Merchant system (45; 75) for offering a deliverable (41; 71) via a network (44; 74) to a potential customer using a customer system (40; 70) and a mobile phone (43; 73), comprising
• a network interface connectable to the network (44; 74),
• a processing unit (46; 76);
• a database (47; 77) for maintaining detailed information about the deliverable (41; 71);
• a module for making the deliverable and some or all of the detailed information about the deliverable (41; 71) displayable to the potential customer on the customer system (40; 70);
• a module for making the deliverable (41; 71) selectable by the potential customer on the customer system (40; 70);
• a module for receiving an order for the deliverable (41; 71) from the customer system (40; 70) via the network and network interface;
• a module for causing a confirmation address to be transmitted to the mobile phone (43; 73) through a mobile telephone network (53; 83);
• a module for receiving an order confirmation issued by the mobile phone (43; 73), or a payment confirmation issued by a carrier system (48; 78);
• a module for making the deliverable (41; 71) available to the customer.

21. The merchant system (45; 75) of claim 20, whereby some or all of the modules are realized in form of software modules that, when executed by the processing unit (46; 76), provide the modules' functionality.

22. The merchant system (45) of claim 20, comprising a call-in unit (55) connectable to a telephone network (56, 53).

23. The merchant system (45) of claim 22, whereby a special call-in number is assigned to the call-in unit (55) so that the call-in unit (55) is reachable form the mobile phone (43) when dialing the call-in number.

24. The merchant system (45; 75) of claim 20, whereby the processing unit (46; 76) resides in a computer system.

25. The merchant system (45; 75) of claim 20, whereby the module for making the deliverable and some or all of the detailed information about the deliverable (41; 71) displayable is an online-catalogue module.

26. The merchant system (45; 75) of claim 20, whereby the module for making the deliverable (41; 71) available to the customer either causes the deliverable (41; 71) to be delivered via a conventional distribution channel, or whereby the module causes the deliverable (41; 71) to be delivered via a communication link (82, 74) to the customer system (70), or whereby the module causes the deliverable (41; 71) to be made downloadable through a communication link (82, 74).

27. The merchant system (45; 75) of claim 20, whereby the confirmation address is acall-in number or an e-mail address.

28. The merchant system (45; 75) of claim 20, whereby the module for causing a confirmation address to be transmitted generates a GSM SMS message comprising the confirmation address.

29. Carrier system (48; 78) for handling the payment process part of a commercial transaction between a customer, using a customer system (40; 70) and a mobile phone (43; 73), and a merchant system (45; 75), whereby the customer orders a deliverable (41; 71) at a certain price at the merchant system (45; 75); the carrier system (48; 78) comprising
• an interface connectable to a telephone network (56, 53; 86; 83),
• a processing unit (49; 79);
• a module for receiving via a communication link (57; 87) detailed information about the ordered deliverable (41; 71) from the merchant system (45; 75)
• a module for causing a confirmation address to be transmitted to the mobile phone (43; 73) through a mobile telephone network (53; 83);
• a module for receiving an order confirmation returned by the mobile phone (43; 73) using the confirmation address;
• a module (49, 50; 79, 80) for charging the customer's phone bill (51; 81) with the certain price;
• a module (49; 79) for sending a payment confirmation to the merchant system (45; 75) causing the merchant system (45; 75) to make the ordered deliverable (41; 71) available to the customer.

30. The carrier system (48; 78) of claim 29, whereby some or all of the modules are realized in form of software modules that, when executed by the processing unit (49; 79), provide the modules' functionality.

31. The carrier system (48; 78) of claim 29, whereby the telephone network is a public switched telephone network (56; 86) that is connectable to the mobile telephone network (53; 83).

32. The carrier system (48; 78) of claim 29, whereby the processing unit (49; 79) resides in a computer system.

33. The carrier system (48; 78) of claim 29, whereby the confirmation address is acall-in number or an e-mail address.

34. The carrier system (48; 78) of claim 29, whereby the module for causing a confirmation address to be transmitted generates a GSM SMS message comprising the confirmation address.

35. The carrier system (78) of claim 29, comprising a call-in unit (85) connectable to the telephone network (86, 83).

36. The carrier system (78) of claim 35, whereby a special call-in number is assigned to the call-in unit (85) so that the call-in unit (85) is reachable form the mobile phone (73) when dialing the call-in number.

37. The carrier system (78) of claim 29, comprising a housekeeping module that removes open orders for which no confirmation is received within a pre-defined period of time.

38. A computer program product comprising a computer readable medium, having thereon:
computer program code means, when said program is loaded, for enabling a customer to order a deliverable (41; 71) that is offered by a merchant system (45; 75) at a certain price, whereby the customer uses a customer system (45; 75) and a mobile phone (43; 73), execute procedure to
• access the merchant system (45; 75) through the customer system (40; 70) and a network (44; 74);
• display the deliverable (41; 71) to the customer on the customer system (40; 70);
• perform an action on the customer system (40; 70) to order the deliverable (41; 71) at the merchant system (45; 75);
• send the phone number of the mobile phone (43; 73) to the merchant system (45; 75);
• receive an order confirmation for the deliverable (41; 71) on the mobile phone (43; 73);
• confirm the ordering of the deliverable (41; 71) using the mobile phone (43; 73) to transmit a response to the merchant system (45; 75) or a carrier system (48; 78);
• obtain the deliverable (41; 71).

39. A computer program element comprising:
computer program code means for enabling a customer to order a deliverable (41; 71) that is offered by a merchant system (45; 75) at a certain price, whereby the customer uses a customer system (45; 75) and a mobile phone (43; 73), execute procedure to
• access the merchant system (45; 75) through the customer system (40; 70) and a network (44; 74);
• display the deliverable (41; 71) to the customer on the customer system (40; 70);
• perform an action on the customer system (40; 70) to order the deliverable (41; 71) at the merchant system (45; 75);
• send the phone number of the mobile phone (43; 73) to the merchant system (45; 75);
• receive an order confirmation for the deliverable (41; 71) on the mobile phone (43; 73);
• confirm the ordering of the deliverable (41; 71) using the mobile phone (43; 73) to transmit a response to the merchant system (45; 75) or a carrier system (48; 78);
• obtain the deliverable (41; 71).

40. A computer program product comprising a computer readable medium, having thereon:
computer program code means, when said program is loaded, for processing by a merchant system (45; 75) the order of a customer for a deliverable (41; 71) that is offered by the merchant system (45; 75) at a certain price, the customer having access to a customer system (40; 70) and a mobile phone (43; 73) with associated phone number, execute procedure to
• enable the customer system (40; 70) to display the deliverable (41; 71) to the customer;
• enable the customer to order the deliverable (41; 71) at the merchant system (45; 75) via the customer system (40; 70) and a network (44; 74);
• enable the sending of an order confirmation for the deliverable (41; 71) to the mobile phone (43; 73) using the phone number;
• receive an order confirmation or payment confirmation from a carrier system (48; 78);
• make the deliverable (41; 71) available to the customer.

41. A computer program element comprising:
computer program code means for processing by a merchant system (45; 75) the order of a customer for a deliverable (41; 71) that is offered by the merchant system (45; 75) at a certain price, the customer having access to a customer system (40; 70) and a mobile phone (43; 73) with associated phone number, execute procedure to
• enable the customer system (40; 70) to display the deliverable (41; 71) to the customer;
• enable the customer to order the deliverable (41; 71) at the merchant system (45; 75) via the customer system (40; 70) and a network (44; 74);
• enable the sending of an order confirmation for the deliverable (41; 71) to the mobile phone (43; 73) using the phone number;
• receive an order confirmation or payment confirmation from a carrier system (48; 78);
• make the deliverable (41; 71) available to the customer.

42. A computer program product comprising a computer readable medium, having thereon:
computer program code means, when said program is loaded, for handling by a carrier system (48; 78) the payment process for a customer who ordered a deliverable (41; 71) through a merchant system (45; 75) at a certain price, the customer having access to a customer system (40; 70) and a mobile phone (43; 73) with associated phone number,
execute procedure to
• obtain transaction information for the ordering of the deliverable (41; 71) from the merchant system (45; 75);
• obtain the phone number of the mobile phone (43; 73);
• send an order confirmation for the deliverable (41; 71) to the mobile phone (43; 73) using the phone number;
• receive through the mobile phone (43; 73) an order confirmation for the deliverable (41; 71);
• charge a phone bill (51; 81) maintained by the carrier system (48; 78) for the mobile phone (43; 73) with the certain price; and
• send an order confirmation or payment confirmation to the merchant system (45; 75).

43. A computer program element comprising:
computer program code means for handling by a carrier system (48; 78) the payment process for a customer who ordered a deliverable (41; 71) through a merchant system (45; 75) at a certain price, the customer having access to a customer system (40; 70) and a mobile phone (43; 73) with associated phone number, execute procedure to
• obtain transaction information for the ordering of the deliverable (41; 71) from the merchant system (45; 75);
• obtain the phone number of the mobile phone (43; 73);
• send an order confirmation for the deliverable (41; 71) to the mobile phone (43; 73) using the phone number;
• receive through the mobile phone (43; 73) an order confirmation for the deliverable (41; 71);
• charge a phone bill (51; 81) maintained by the carrier system (48; 78) for the mobile phone (43; 73) with the certain price; and
• send an order confirmation or payment confirmation to the merchant system (45; 75).
